# EUROPÄISCHE PATENTSCHRIFT

(11) **EP 4 043 517 B1**
(45) Veröffentlichungstag und Bekanntmachung des Hinweises auf die Patenterteilung: **30.04.2025**
(21) Anmeldenummer: 22153822.6
(22) Anmeldetag: 28.01.2022
(51) Int. Cl.: C08K 3/013, C08K 3/22, C08K 3/26, C08K 3/30, C08K 3/34, C08K 3/36, C08K 5/00, C08K 5/12, B32B 5/02, B32B 5/20, B32B 5/24, B32B 9/04, B32B 9/06, B32B 17/02, B32B 27/30, B32B 29/00, C08J 9/00, C08J 9/30, D06N 3/00, E04F 15/00, E04F 15/10

(54) **VERWENDUNG VON 1,4-BIS(2-ETHYLHEXYL)CYCLOHEXANDICARBOXYLAT ALS WEICHMACHER IN OBERFLÄCHENBELÄGEN**
USE OF 1,4-BIS(2-ETHYLHEXYL) CYCLOHEXANE DICARBOXYLATE AS PLASTICIZER IN SURFACE COATINGS
UTILISATION DE 1,4-BIS(2-ÉTHYLHEXYL)CYCLOHEXANDICARBOXYLATE COMME PLASTIFIANT DANS DES REVÊTEMENTS DE SURFACE

(30) Priorität: 16.02.2021 EP 21157273
(43) Veröffentlichungstag der Anmeldung: 17.08.2022
(73) Patentinhaber: Evonik Oxeno GmbH & Co. KG, 45772 Marl (DE)
(72) Erfinder: GRASS, Michael, 45721 Haltern am See (DE); SCHULZ, Imke, 59348 Lüdinghausen (DE); GEHLEN, Carsten, 45772 Marl (DE)
(74) Vertreter: Evonik Patent Association

(56) Entgegenhaltungen:
- EP-A1- 3 211 029
- WO-A1-03/029339
- WO-A1-2015/101569
- JP-A- 2015 223 700
- DATABASE CA [online] CHEMICAL ABSTRACTS SERVICE, COLUMBUS, OHIO, US; 14 December 2015 (2015-12-14), KANO, TOSHIYA: "Industrial sheet materials made of soft vinyl chloride resin composition containing a (meth)acrylate compound", XP002803783, retrieved from STN Database accession no. 2015:1993643

## Beschreibung

Die vorliegende Erfindung betrifft mehrschichtige Oberflächenbeläge mit jeweils mindestens einer Schicht erhalten aus einem füllstoffhaltigen PVC-Plastisol und erhalten aus einem füllstofffreien PVC-Plastisol, die beide eine Weichmacherzusammensetzung, umfassend 1,4-Bis(2-ethylhexyl)cyclohexandicarboxylat (im Folgenden auch: 1,4-DEHCH), enthalten. Solche Oberflächenbeläge können als Fußbodenbeläge oder als Kunstleder eingesetzt werden.

Mehrschichtige Oberflächenbeläge, insbesondere Fußbodenbeläge und Kunstleder, sind bekannt und werden großtechnisch produziert. Solche Oberflächenbeläge bestehen aus mehreren Schichten. Zumindest einige der Schichten bestehen zum überwiegenden Teil aus Polyvinychlorid (PVC), das mit Weichmachern versetzt werden muss, um Eigenschaften wie Dehnbarkeit und Verarbeitbarkeit zu verbessern. Der in Europa bekannteste Weichmacher für PVC, der auch als Standard für Anwendungen in Fußbodenbelägen und Kunstleder gilt, ist Diisononylphthalat (DINP). DINP zeichnet sich durch ein akzeptables Gelierverhalten, eine mittlere Viskosität und vor allem eine niedrige Flüchtigkeit aus. Insbesondere eine niedrige Flüchtigkeit ist in den genannten Anwendungen wichtig, um Emissionen während der Herstellung oder im finalen Produkt zu reduzieren. Während der Herstellung der Weich-PVC-Artikel würde auf Grund der hohen Verarbeitungstemperaturen der Weichmacher zumindest anteilig verdampfen und dann an kälteren Stellen kondensieren und/oder abtropfen und somit zu Verschmutzungen führen, die dann von Zeit zu Zeit das Abstellen der Produktionen erforderlich machen, was zu wirtschaftlichen Nachteilen führen kann.

Zwar gehört DINP zu den weltweiten Standards. Durch Marktanforderungen werden auch immer mehr phthalatfreie Weichmacher eingesetzt (vgl. US 2016/0326346 A1). Einer der bedeutendsten phthalatfreien Weichmacher ist 1,2-Cyclohexandicarbonsäurediisononylester (1,2-DINCH). Terephthalate wie beispielsweise Di-2-ethylhexylterephthalat (DEHT oder DOTP) sind ebenfalls mögliche großvolumige Alternativen für Phthalate oder insbesondere DINP, diese haben aber immer wieder Akzeptanzprobleme in der öffentlichen Wahrnehmung erfahren, weil sie zur Familie der Phthalate gezählt werden. Diese beiden Weichmacherklassen weisen im Vergleich mit DINP jedoch eine niedrigere Geliergeschwindigkeit und eine höhere Flüchtigkeit auf. Um die Gelierschwäche zu kompensieren, muss man Schnellgelierer zusetzen. Schnellgelierer sind aber in aller Regel höher flüchtig und erhöhen somit die Prozessflüchtigkeit der gesamten Weichmacherzusammensetzung. Darüber hinaus werden durch den zusätzlichen Einsatz eines Schnellgelierers die Rezepturkosten erhöht, da diese in der Regel höherpreisig sind.

Die Aufgabe der vorliegenden Erfindung war die Bereitstellung eines mehrschichtigen Oberflächenbelags, bei dem in den vorhandenen PVC-Plastisolschichten eine vorteilhafte Weichmacherzusammensetzung enthalten ist.

Die Aufgabe konnte durch den erfindungsgemäßen mehrschichtigen Oberflächenbelag nach Anspruch 1 gelöst werden. Bevorzugte Ausgestaltungen der vorliegenden Erfindung sind in den Unteransprüchen angegeben. Ein solcher Oberflächenbelag ist ein mehrschichtiger Oberflächenbelag, welcher zumindest eine Schicht erhalten aus einem füllstoffhaltigen PVC-Plastisol, welches PVC, einen Füllstoff und einen Weichmacherzusammensetzung umfasst und zumindest einer Schicht erhalten aus einem füllstofffreien PVC-Plastisol, welches PVC und eine Weichmacherzusammensetzung umfasst, dadurch gekennzeichnet, dass die Weichmacherzusammensetzung in dem füllstoffhaltigen PVC-Plastisol und in dem füllstofffreien PVC-Plastisol jeweils 1,4-Bis(2-ethylhexyl)cyclohexandicarboxylat (1,4-DEHCH) enthält.

Diese erfindungsgemäße Weichmacherzusammensetzung bewirkt eine gegenüber anderen Cyclohexandicarbonsäureestern oder Mischungen dieser Ester verbesserte Gesamtperformance bei Einsatz in Plastisolen. So kann auch ohne Zusatz von Schnellgelierern die angestrebte Geliergeschwindigkeit von DINP erreicht werden. Außerdem weisen Plastisole mit der erfindungsgemäßen Weichmacherzusammensetzung eine gegenüber Plastisolen mit DINP deutlich verringerte Viskosität auf, die entweder zum schnelleren oder einfacheren Verstreichen des Plastisols führt und/oder auch vorteilhaft zur Reduktion von Rezepturkosten genutzt werden kann, weil der Füllstoffgehalt erhöht werden kann. Gegenüber anderen Cyclohexandicarbonsäureestern (z. B. 1,4-DINCH, 1,2-DINCH, 1,2-DEHCH) ist die Geliergeschwindigkeit erhöht, was zu einer höheren Verarbeitungsgeschwindigkeit oder geringerem Energieeinsatz bei der Prozessierung führen kann.

Die Formulierung "Schicht erhalten aus" meint im Rahmen dieser Erfindung, dass die jeweilige Schicht aus der entsprechenden Plastisolzusammensetzung erhalten wird. Für die Herstellung der erfindungsgemäßen Oberflächenbeläge werden die hier vorgestellten Plastisole in flüssiger bzw. fließfähiger Form eingesetzt, Schicht für Schicht über ein Streichverfahren aufgetragen und danach immer wieder bei Temperaturen, die weder für eine vollständige Gelierung noch für eine Verschäumung ausreichen (100 - 150 °C) vorgeliert, was die Schichten vortrocknet und die Auftragung der nächsten Schicht ermöglicht und erst in einem abschließenden Schritt bei Temperaturen von 160 - 230 °C beispielsweise in einem sogenannten "Gelierkanal" zum Endprodukt verarbeitet. Bei diesem Schritt findet dann auch die Verschäumung und das "Verbinden" der einzelnen Schichten statt.

Die Schichten des erfindungsgemäßen Oberflächenbelags können prinzipiell in jeglicher Reihenfolge angeordnet sein. Erfindungsgemäß bevorzugt ist aber, dass sich die Schicht erhalten aus dem füllstoffhaltigen PVC-Plastisol unterhalb der Schicht erhalten aus dem füllstofffreien PVC-Plastisol angeordnet ist. Zwischen den beiden Schichten erhalten aus dem füllstoffhaltigen PVC-Plastisol und erhalten aus dem füllstofffreien PVC-Plastisol kann eine oder können mehrere weitere Schichten und/oder ein Trägermaterial wie zum Beispiel Polyestergewebe, Glasvlies, Papier oder Pappe vorhanden sein. Das Trägermaterial kann sich bevorzugt auch an einer Stelle innerhalb der füllstoffhaltigen Schicht befinden.

Das füllstoffhaltige PVC-Plastisol enthält neben dem PVC einen Füllstoff und eine Weichmacherzusammensetzung. Als PVC für das füllstoffhaltige PVC-Plastisol können unterschiedliche PVC-Typen eingesetzt werden. Bevorzugt ist das PVC in dem füllstoffhaltigen PVC-Plastisol ein Pasten-PVC, ein Extender-PVC oder eine Mischung von zwei oder mehr der genannten PVC-Arten. In einer alternativen Ausführungsform ist das PVC eine Mischung aus zwei oder mehr Pasten-PVCs.

Der Unterschied zwischen einem Pasten-PVC und einem Extender-PVC ist üblicherweise die Art der Herstellung und die daraus resultierende Partikelgröße der entstandenen PVC-Partikel. Ein Pasten-PVC kann durch Emulsionspolymerisation oder Mikrosuspensionspolymerisation hergestellt werden, wodurch Partikel aus PVC entstehen, die typischerweise einen Partikeldurchmesser von 1 bis 40 µm aufweisen. Ein Extender-PVC kann durch Suspensionspolymerisation hergestellt werden. Die dabei erhaltenen agglomerierten Partikel aus PVC weisen normalerweise einen Partikeldurchmesser von 80 bis 200 µm auf. Die Zugabe eines Extender-PVC's ermöglicht u.a. die Absenkung des Viskositätsniveaus des Plastisols auch bei niedrigem Weichmachergehalt, wodurch das Verstreichen der Plastisole leichter wird.

Die genaue Zusammensetzung ist grundsätzlich variabel und kann auf die entsprechende Anwendung zugeschnitten werden. Für den erfindungsgemäßen Oberflächenbelag ist es bevorzugt, dass das füllstoffhaltige PVC-Plastisol die Weichmacherzusammensetzung in einem Anteil von 35 bis 80 Massenteilen pro 100 Massenteilen, vorzugsweise 40 bis 75 Massenteilen pro 100 Massenteilen PVC enthält. Die Weichmacherzusammensetzung enthält 1,4-Bis(2-ethylhexyl)cyclohexandicarboxylat (1,4-DEHCH), kann aber auch noch einen oder mehrere weitere Weichmacher enthalten. Entsprechende Weichmacher sind dem Fachmann bekannt. Das 1,4-DEHCH ist in der Weichmacherzusammensetzung insbesondere in einem Anteil von mindestens 50 Gew.-%, vorzugsweise mindestens 65 Gew.-% und weiter bevorzugt mindestens 80 Gew.-%, jeweils bezogen auf die gesamte Weichmacherzusammensetzung, enthalten. In einer besonders bevorzugten Ausführungsform besteht die Weichmacherzusammensetzung für das füllstoffhaltige PVC-Plastisol ausschließlich aus 1,4-DEHCH.

Das füllstoffhaltige PVC-Plastisol für den erfindungsgemäßen mehrschichten Oberflächenbelag enthält den Füllstoff vorzugsweise in einem Anteil von 50 bis 200 Massenteilen pro 100 Massenteilen PVC, vorzugsweise 70 bis 180 Massenteilen pro 100 Massenteilen PVC, besonders bevorzugt 85 bis 170 Massenteilen pro 100 Massenteilen PVC. Geeignete Füllstoffe für Oberflächenbeläge sind dem Fachmann bekannt. Bevorzugte Füllstoffe, die im Rahmen der Erfindung in dem füllstoffhaltigen PVC-Plastisol eingesetzt werden können, sind Calciumcarbonat, Magnesiumcarbonat, Ton, Calciumsilikat, Talk, Calciumsulfat, Calciumoxid, Magnesiumoxid, Aluminiumsilikate, Dolomit, Siliciumoxid und Kieselgur. Besonders bevorzugt sind Calciumcarbonat und Magnesiumcarbonat.

Das füllstoffhaltige PVC-Plastisol kann neben den erwähnten Inhaltsstoffen zusätzlich Additive enthalten. Beispiele für zusätzliche Additive sind rheologische Additive, mit denen die Viskosität des Plastisols verringert werden kann, weiterhin epoxidierte Pflanzenöle, wie epoxidiertes Sojaöl (ESBO) als Co-Stabilisatoren, sowie Thermostabilisatoren oder Entlüfter, mit denen die Oberflächenspannung herabgesetzt werden kann, um Luftblasen, die bei der Herstellung im Plastisol entstehen, leichter aus dem Plastisol entfernen zu können. Beispiele für rheologische Additive sind die unter den Handelsnamen VISCOBYK^{®}-5120, VISCOBYK^{®}-5130 und VISCOBYK^{®}-4041 erhältlichen Produkte. Bekannte Entlüfter sind Methylalkylpolysiloxane (erhältlich beispielsweise unter dem Handelsnamen BYK^{®}-3105) oder Polyalkylenderivate (erhältlich beispielsweise unter dem Handelsnamen BYK^{®}-3155). Bevorzugte Entlüfter sind silikonfrei. Geeignete Thermostabilisatoren sind Bleisalze, Organozinnverbindungen, Barium/Zinkverbindungen, Cadmiumverbindungen oder Zinkverbindungen, Calcium/Zink-Stabilisatoren und organisch-basierte Stabilisatoren (sog. OBS). Bevorzugte Thermostabilisatoren sind Barium/Zinkverbindungen, Calcium/Zink-Stabilisatoren und organisch-basierte Stabilisatoren (sog. OBS). Die Additive können jeweils einzeln in einer Menge von bis zu 15 Massenteilen pro 100 Massenteilen PVC enthalten in dem Plastisol sein.

Der mehrschichtige Oberflächenbelag kann weiterhin ein Trägermaterial umfassen. Als Trägermaterialien für die hier beschriebenen Oberflächenbeläge können verschiedene Materialien eingesetzt werden. Vorzugsweise besteht das Trägermaterial für den mehrschichtigen Oberflächenbelag aus einem Polyestergewebe, aus einem Glasvlies, aus Papier oder aus Pappe. Ist ein Trägermaterial vorhanden, wird es mit dem füllstoffhaltigen PVC-Plastisol zumindest auf der Oberseite, also einseitig, beschichtet. Das betrifft insbesondere Papier und Pappe. Durch die Beschichtung wird die fließfähige Plastisolzusammensetzung in die Struktur des Trägermaterials eindringen. Das Trägermaterial gehört damit im Sinne der vorliegenden Erfindung zur Schicht erhalten aus einem füllstoffhaltigen PVC-Plastisol. Bevorzugt wird das Trägermaterial beidseitg, d. h. auf der Oberseite und der Unterseite mit dem füllstoffhaltigen PVC-Plastisol beschichtet, was auch in einem Schritt geschehen kann. Dadurch wird das Trägermaterial mit dem füllstoffhaltigen PVC-Plastisol imprägniert bzw. getränkt. Das Trägermaterial ist dann in der Schicht erhalten aus einem füllstoffhaltigen PVC-Plastisol enthalten.

Das füllstofffreie PVC-Plastisol enthält neben dem PVC zumindest noch eine Weichmacherzusammensetzung. Entsprechend seiner Bezeichnung enthält das füllstofffreie PVC-Plastisol keinen Füllstoff, also keine Substanz die als Füllstoff anzusehen ist. Die Schicht erhalten aus dem füllstofffreien PVC-Plastisol ist vorzugsweise transparent. Als PVC für das füllstofffreie PVC-Plastisol können unterschiedliche PVC-Typen eingesetzt werden. Bevorzugt ist das PVC in dem füllstofffreien PVC-Plastisol ein Pasten-PVC, ein Extender-PVC oder eine Mischung von zwei oder mehr der genannten PVC-Arten. In einer alternativen Ausführungsform ist das PVC eine Mischung aus zwei oder mehr Pasten-PVCs. Die Definition und die Unterschiede zwischen Pasten-PVC und Extender-PVC sind vorgenannt bereits erläutert worden.

Für das füllstofffreie PVC-Plastisol ist es bevorzugt, dass es mindestens ein Pasten-PVC und mindestens ein Extender-PVC enthält. Die Mengen von Pasten-PVC und Extender-PVC können in weiten Bereichen variiert und an die Anforderungen der jeweiligen Anwendung angepasst werden. In einer bevorzugten Ausführungsform ist das Pasten-PVC in einer Menge von 40 bis 80 Gew.-% und das Extender-PVC in einer Menge von 20 bis 60 Gew.-%, jeweils bezogen auf die Gesamtmenge an PVC in dem füllstofffreien PVC-Plastisol, enthalten. Es versteht sich, dass sich dabei die Mengen von Pasten-PVC und Extender-PVC zu 100 Gew.-% addieren müssen.

Die Zusammensetzung des füllstofffreien PVC-Plastisols ist grundsätzlich variabel und kann auf die entsprechende Anwendung zugeschnitten werden. Für den erfindungsgemäßen Oberflächenbelag ist es bevorzugt, dass das füllstofffreie PVC-Plastisol die Weichmacherzusammensetzung, enthaltend 1,4-DEHCH, in einem Anteil von 15 bis 40 Massenteilen pro 100 Massenteilen PVC enthält. Die Weichmacherzusammensetzung enthält 1,4-Bis(2-ethylhexyl)cyclohexandicarboxylat (1,4- DEHCH), kann aber auch noch einen oder mehrere weitere Weichmacher enthalten. Entsprechende Weichmacher sind dem Fachmann bekannt. Das 1,4-DEHCH ist in der Weichmacherzusammensetzung insbesondere in einem Anteil von mindestens 50 Gew.-%, vorzugsweise mindestens 65 Gew.-% und weiter bevorzugt mindestens 80 Gew.-%, jeweils bezogen auf die gesamte Weichmacherzusammensetzung, enthalten. Es ist erfindungsgemäß bevorzugt, dass die Weichmacherzusammensetzung für das füllstofffreie PVC-Plastisol neben 1,4-DEHCH einen Schnellgelierer umfasst. Der Schnellgelierer kann in dem füllstofffreien PVC-Plastisol in einem Anteil von bis zu 15 Massenteilen pro 100 Massenteilen PVC vorhanden sein. Geeignete Schnellgelierer sind Glycoldibenzoate, Dibutyl- oder Dipentylterephthalate, 2-Ethylhexyl-, Isononyl- oder Isodecylbenzoate, Tributylcitrat, Acetyltributylcitrat oder hydrierte Phthalsäure- oder Terephthalsäureester mit C4 bis C7-Alkylketten.

Das füllstofffreie PVC-Plastisol kann neben den erwähnten Inhaltsstoffen zusätzlich Additive enthalten. Beispiele für zusätzliche Additive sind rheologische Additive, mit denen die Viskosität des Plastisols verringert werden kann. Beispiele für bekannte rheologische Additive sind die unter den Handelsnamen VISCOBYK^{®}-5120, VISCOBYK^{®}-5130 und VISCOBYK^{®}-4041 erhältlichen Produkte. Die Additive können in einem Anteil von 3 bis 12, bevorzugt 4 bis 10 Massenteilen pro 100 Massenteilen PVC in dem füllstofffreien PVC-Plastisol enthalten sein.

Darüber hinaus kann das füllstofffreie PVC-Plastisol einen oder mehrere Thermostabilisator(en) enthalten. Geeignete Thermostabilisatoren sind Bleisalze, Organozinnverbindungen, Barium/Zinkverbindungen, Cadmiumverbindungen oder Zinkverbindungen, Calcium/Zink-Stabilisatoren und organisch-basierte Stabilisatoren (sog. OBS). Bevorzugte Thermostabilisatoren sind Barium/Zinkverbindungen, Calcium/Zink-Stabilisatoren und organisch-basierte Stabilisatoren (sog. OBS). Der Anteil des oder der Stabilisatoren an dem füllstofffreien PVC-Plastisol beträgt vorzugsweise 1 bis 4 Massenteile pro 100 Massenteilen PVC.

Der mehrschichtige Oberflächenbelag nach der vorliegenden Erfindung kann neben den bereits genannten Schichten weitere Schichten aufweisen. So kann der Oberflächenbelag rückseitig eine zusätzliche geschäumte Schicht erhalten aus einem schäumbaren PVC-Plastisol aufweisen. Durch eine solche Schicht können die akustischen Eigenschaften verbessert werden. Bei einem Bodenbelag kann eine solche Schicht erhalten aus einem geschäumten PVC-Plastisol zur Trittschalldämpfung eingesetzt werden.

Die zusätzliche geschäumte Schicht erhalten aus einem schäumbaren PVC-Plastisol umfasst insbesondere PVC, eine Weichmacherzusammensetzung, enthaltend zumindest 1,4-Bis(2-ethylhexyl)cyclohexandicarboxylat (1,4-DEHCH), einen oder mehrere Füllstoffe, ein Treibmittel, einen Kicker und optional ein oder mehrere zusätzliche Additive. Die Weichmacherzusammensetzung der zusätzlichen geschäumten Schicht aus einem schäumbaren PVC-Plastisol kann zusätzlich einen Schnellgelierer umfassen. Geeignete Schnellgelierer sind Glycoldibenzoate, Dibutyl- oder Dipentylterephthalate, 2-Ethylhexyl-, Isononyl- oder Isodecylbenzoate, Tributylcitrat, Acetyltributylcitrat oder hydrierte Phthalsäure- oder Terephthalsäureester mit C4 bis C7-Alkylketten.

Die Zusammensetzung der zusätzlichen geschäumten Schicht erhalten aus einem schäumbaren PVC-Plastisol ist grundsätzlich variabel und kann auf die entsprechende Anwendung zugeschnitten werden. Für den erfindungsgemäßen Oberflächenbelag ist es bevorzugt, dass die zusätzliche Schicht aus geschäumten PVC-Plastisol die Weichmacherzusammensetzung, enthaltend 1,4-DEHCH, in einem Anteil von 40 bis 80 Massenteilen pro 100 Massenteilen PVC enthält. Die zusätzliche Schicht aus geschäumten PVC-Plastisol kann außerdem den Füllstoff in einem Anteil von 70 bis 200 Massenteilen pro 100 Massenteilen PVC enthalten.

Um die gewünschte Aufschäumung zu erreichen, können ein oder mehrere Treibmittel eingesetzt werden. Treibmittel zersetzen sich, wodurch Gas(blasen) entstehen, die die Schäumung hervorrufen. Bekannte Treibmittel sind beispielsweise Azodicarbonamid, Carbonate, Hydrogencarbonate oder Oxybisbenzenesulfonylhydrazid (OBSH). Das Treibmittel muss üblicherweise in nur relativ geringen Mengen eingesetzt werden. Grundsätzlich gilt jedoch, dass die Menge an Treibmittel mit dem gewünschten Verschäumungsgrad korreliert. Die zusätzliche geschäumte Schicht erhalten aus einem schäumbaren PVC-Plastisol enthält das Treibmittel in einem Anteil von 2 bis 5 Massenteilen pro 100 Massenteilen PVC.

Die Zersetzung des Treibmittels kann gemäß der vorliegenden Erfindung durch einen sogenannten Kicker katalysiert werden. Als Kicker finden in der Regel Zink-haltige Verbindungen Verwendung. Geeignete Kicker sind beispielsweise ZnO, ZnBO₃ aber auch Zn-Salze wie Zn-Octanoat, NaZn oder KZn oder MgZn-Verbindungen. Der Kicker wird üblicherweise in geringer Menge eingesetzt, die Art und Menge hat aber auch entscheidenden Einfluss auf die Geschwindigkeit der Zersetzung des Treibmittels und somit auf die während des zeitlich limitierten Aufschäumprozesses gebildete Menge an Gasblasen, welche die Verschäumung bedingen. Die zusätzliche Schicht aus geschäumten PVC-Plastisol kann den Kicker deshalb vorzugsweise in einem Anteil von 1 bis 5 Massenteilen pro 100 Massenteilen PVC enthalten.

Die zusätzliche geschäumte Schicht erhalten aus einem schäumbaren PVC-Plastisol kann neben den erwähnten Inhaltsstoffen zusätzlich Additive enthalten. Beispiele für zusätzliche Additive sind rheologische Additive, mit denen die Viskosität des Plastisols verringert werden kann. Beispiele für rheologische Additive sind die unter den Handelsnamen VISCOBYK^{®}-5120, VISCOBYK^{®}-5130 und VISCOBYK^{®}-4041 erhältlichen Produkte. Die Additive können in einem Anteil von 4 bis 10 Massenteilen pro 100 Massenteilen PVC in dem schäumbaren PVC-Plastisol enthalten sein.

Optional kann die zusätzliche geschäumte Schicht an Stelle einer vorgenannt erwähnten chemischen Zersetzung eines Treibmittels durch eine mechanische Verschäumung also durch Einrühren von Luft hergestellt werden. Anstelle von Kicker und Treibmittel werden in diesem Falle dem entsprechenden Plastisol sog. Schaumstabilisatoren zugesetzt, die verhindern, dass die eingetragene Luft wieder entweicht und der Schaum kollabiert. Solche Verbindungen, in der Regel auf der Basis von Silikonen oder Seifen sind dem Fachmann beispielsweise unter dem Markennamen "BYK^{®} 8070" oder BYK^{®} 8020 bekannt. In einer besonders bevorzugten Ausführungsform kann dieser mechanische Schaum auch zur Imprägnierung des Trägermaterials verwendet werden.

Der erfindungsgemäße mehrschichtige Oberflächenbelag weist in einer bevorzugten Ausführungsform der vorliegenden Erfindung eine Dekoration auf. Eine Dekoration meint im Sinne der vorliegenden Erfindung eine visuelle und/oder haptische Gestaltung, beispielsweise durch das Einbringen von (Druck)Farben und/oder dem Einprägen eines Musters. Eine solche Dekoration kann auf der Schicht erhalten aus dem füllstoffhaltigen PVC aufgetragen und/oder eingeprägt werden. Es kann aber auch eine zusätzliche, optional geschäumte, dekorative Schicht erhalten aus einem PVC-Plastisol vorhanden sein, auf die die Dekoration aufgetragen und/oder eingeprägt wird. Die zusätzliche optional geschäumte, dekorative Schicht erhalten aus einem schäumbaren PVC-Plastisol umfasst insbesondere PVC, eine Weichmacherzusammensetzung, enthaltend zumindest 1,4-Bis(2-ethylhexyl)cyclohexandicarboxylat, einen Füllstoff und optional ein Treibmittel, einen Kicker und/oder ein oder mehrere Additive.

In einer besonders bevorzugten Ausführungsform der vorliegenden Erfindung umfasst der mehrschichtige Oberflächenbelag der vorliegenden Erfindung ein Trägermaterial, zumindest eine Schicht erhalten aus einem füllstoffhaltigen PVC-Plastisol, welches PVC, einen Füllstoff und eine Weichmacherzusammensetzung umfasst, zumindest eine Schicht erhalten aus einem füllstofffreien PVC-Plastisol, welches PVC und eine Weichmacherzusammensetzung umfasst, und zumindest eine geschäumte Schicht aus einem schäumbaren PVC-Plastisol, welches PVC, eine Weichmacherzusammensetzung, einen Füllstoff, ein Treibmittel und einen Kicker umfasst. Die Weichmacherzusammensetzung allen eingesetzten PVC-Plastisolen enthält jeweils 1,4-Bis(2-ethylhexyl)cyclohexandicarboxylat (1,4-DEHCH). In einer besonders bevorzugten Ausführungsform umfasst der mehrschichtige Oberflächenbelag noch eine weitere kratzbeständige Schicht, die vorzugsweise aus Polyurethan oder Polyacrylat besteht und durchsichtig (transparent) ist.

Ganz besonders bevorzugt enthält der mehrschichtige Oberflächenbelag zwischen der füllstofffreien und der füllstoffhaltigen Schicht eine weitere füllstoffhaltige, insbesondere geschäumte Schicht, auf die das Dekor aufgetragen wird. Das Auftragen der Dekorfarben kann zum Beispiel mit Hilfe einer Siebdrucktrommel in einem oder mehreren Schritten (für jede verwendete Farbe einzeln) erfolgen. Hierbei wird oft das Prinzip der chemischen Inhibierung angewandt, d.h. die Druckfarbe, die auch ein eingefärbtes PVC-Plastisol sein kann, kann mit einer Inhibitorlösung versetzt sein, die an den Stellen, an denen sie auf diese Schicht aufgetragen wird, durch chemische Komplexierung des Kickers das Zersetzen des Treibmittels verhindert oder verlangsamt, so dass an dieser Stelle keine oder nur eine geringe Aufschäumung erfolgt. Geeignete Inhibitoren sind zum Beispiel auf Basis von Benzotriazolen oder Thioharnstoff kommerziell verfügbar.

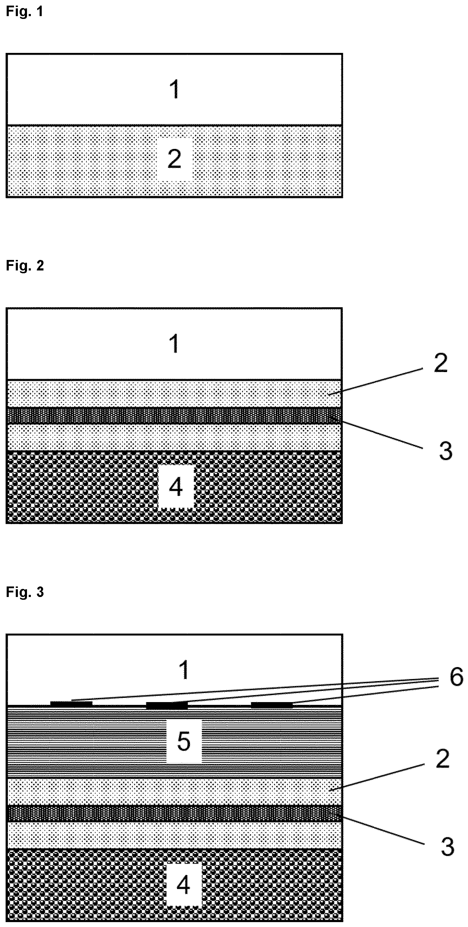

Für den erfindungsgemäßen Oberflächenbelag sind bestimmte Abfolgen der Schichten bevorzugt. Diese Schichtfolgen sind auch den exemplarischen Abbildungen Fig.1, Fig. 2 und Fig. 3 zu entnehmen. In der grundsätzlichen Ausführungsform (s. Fig. 1) umfasst der mehrschichtige Oberflächenbelag zumindest eine Schicht erhalten aus einem füllstoffhaltigen PVC-Plastisol (2) und zumindest eine Schicht erhalten aus einem füllstofffreien PVC-Plastisol (1), die vorzugsweise transparent ist. Die zumindest eine vorzugsweise transparente Schicht erhalten aus einem füllstofffreien PVC-Plastisol (1) ist dabei oberhalb der zumindest einen Schicht erhalten aus einem füllstoffhaltigen PVC-Plastisol (2) angeordnet.

Fig. 2 zeigt die bevorzugte Ausführungsform, bei der zusätzlich zu der zumindest einen vorzugsweise durchsichtigen bzw. transparenten Schicht erhalten aus einem füllstofffreien PVC-Plastisol (1) und der zumindest einen Schicht erhalten aus einem füllstoffhaltigen PVC-Plastisol (2) ein Trägermaterial (3) und eine geschäumte Schicht erhalten aus einem schäumbaren PVC-Plastisol (4) vorhanden sind. Das Trägermaterial (3) ist in dieser Ausführungsform beidseitig mit dem füllstoffhaltigen PVC-Plastisol beschichtet worden und befindet sich deshalb innerhalb der zumindest eine Schicht erhalten aus einem füllstoffhaltigen PVC-Plastisol (2). Unterhalb dieser Schicht (2) ist dann die geschäumte Schicht erhalten aus einem schäumbaren PVC-Plastisol (4) angeordnet. Denkbar wäre auch, dass das Trägermaterial nur auf der Oberseite mit dem füllstoffhaltigen PVC-Plastisol beschichtet wird. Das Trägermaterial würde dann direkt an die geschäumte Schicht erhalten aus einem schäumbaren PVC-Plastisol (4) grenzen.

Fig. 3 zeigt eine weiterhin bevorzugte Ausführungsform, bei der zusätzliche eine optional geschäumte, dekorative Schicht (5) vorhanden ist. Auf diese Schicht wird dann die visuelle (farbliche) und/oder haptische (z. B. Prägung eines Musters) Dekoration (6) aufgebracht. Die dekorative Schicht (5) ist dabei zwischen der zumindest einen Schicht erhalten aus einem füllstoffhaltigen PVC-Plastisol (2) und der zumindest einen vorzugsweise transparenten Schicht erhalten aus einem füllstofffreien PVC-Plastisol (1) angeordnet.

In einer besonders bevorzugten Ausführungsform wird auf die vorzugsweise durchsichtige bzw. transparente Schicht erhalten aus einem füllstofffreiem PVC-Plastisol noch eine kratzbeständige Schicht, vorzugsweise aus Polyurethan oder Polyacrylat, aufgetragen, um die Kratz- bzw. Abriebbeständigkeit zu erhöhen. Eine solche Schicht ist in den Abbildungen nicht gezeigt.

Die mehrschichtigen Oberflächenbeläge nach der vorliegenden Erfindung lassen sich in dem Fachmann bekannter Weise durch schichtweisen Auftrag der noch fließfähigen Plastisole herstellen, optional mit einer Zwischentrocknung, beispielsweise mit Hilfe einer Walze / Geliertrommel, die auf ca. 100 bis 140 °C beheizt ist, was zu einem Angelieren, also einem nicht vollständigen Gelieren, führt, so dass ein weiteres Auftragen der nächsten Schicht möglich ist, ohne dass die Plastisole ineinander verlaufen. Die optionale Zwischentrocknung kann beispielsweise mit einer sogenannten Geliertrommel, also einer auf die gewünschte Temperatur aufgeheizten Walze, erfolgen.

Der mehrschichte Oberflächenbelag kann für verschiedene Anwendungen genutzt werden. In einer besonders bevorzugten Ausführungsform der vorliegenden Erfindung ist der Oberflächenbelag ein Fußbodenbelag oder ein Kunstleder und wird für entsprechende Anwendungen eingesetzt.

Die Erfindung wird nachfolgend anhand von Beispielen erläutert. Diese Beispiele zeigen jedoch nur exemplarische Ausführungsformen und sind nicht einschränkend zu verstehen.

### Beispiel 1 - Plastisolherstellung

Es wurden PVC-Plastisole hergestellt, wie sie beispielsweise zur Fertigung von Deckstrichfilmen (füllstofffreie Schicht) für Fußbodenbeläge verwendet werden. Die Mengen in den Plastisolrezepturen sind jeweils in Massenanteilen (phr) angegeben. Die Rezeptur ist in Tabelle 1 dargestellt.

**Tabelle 1: Plastisolrezeptur**

| | phr |
|---|---|
| PVC (Vestolit P1430 K70 - Ultra; Fa. Vestolit) | 100 |
| Weichmacher oder Weichmachergemisch | 50 |
| epoxidiertes Sojabohnenöl als Co-Stabilisator (Edenol D81, Fa. Emery Oleochemicals) | 3 |
| Thermostabilisator auf Ca/Zn-Basis ((Reagens SLX 781) | 2 |

Zuerst wurden die flüssigen und dann die pulverförmigen Bestandteile in einen PE-Becher eingewogen. Von Hand wurde die Mischung mit einem Spatel so eingerührt, dass kein unbenetztes Pulver mehr vorhanden war. Der Mischbecher wurde dann in die Klemmvorrichtung eines Dissolverrührers eingespannt. Nach Einschalten des Rührers wurde die Drehzahl langsam auf ca. 2000 UpM (Umdrehungen pro Minute) erhöht. Währenddessen wurde das Plastisol vorsichtig entlüftet. Dazu wurde der Druck auf einen Druck unterhalb 20 mbar eingestellt. Sobald das Plastisol eine Temperatur von ca. 30°C erreicht hatte, wurde die Drehzahl auf ca. 350 UpM gesenkt. Ab jetzt wurde das Plastisol für 9 Minuten bei dieser Drehzahl und einem Druck unterhalb von 20 mbar entlüftet. Damit wurde sichergestellt, dass es bei der Homogenisierung des Plastisols nicht zu einem vorzeitigen Angelieren kommen konnte.

Folgende Weichmacher oder Mischungen aus den nachfolgenden Weichmachern wurden in den Plastisolen eingesetzt:
1,4-DEHCH = 1,4-Bis(2-ethylhexyl)cyclohexandicarboxylat (erfindungsgemäß, Hanwha Chemical Corp., Korea)
1,2-DEHCH = 1,2-Bis(2-ethylhexyl)cyclohexandicarboxylat (Nan Ya, Taiwan)
DINP = Diisononylphthalat (VESTINOL 9, Fa. Evonik Operations GmbH)
1,2-DINCH = 1,2-Cyclohexandicarbonsäurediisononylester (ELATUR CH, Evonik Operations GmbH)
1,4-DINCH = 1,4-Cyclohexandicarbonsäurediisononylester (hergestellt durch Kernhydrierung von Diisononylterephthalat)
DOTP = Dioctylterephthalat (Eastman 168, Fa. Eastman, USA)
DPT = Dipentylterephthalat (Elatur DPT, Fa. Evonik Operations GmbH)
2088 = Benzoflex 2088 (Gemisch von Glycoldibenzoaten, Fa. Eastman, USA)

### Beispiel 2 - Bestimmung der Plastisolviskosität

Die Messung der Viskosität der in Beispiel 1 hergestellten Plastisole wurde mit einem Rheometer Physica MCR 101 (Firma Anton Paar Germany GmbH) mit Hilfe der zugehörigen Software durchgeführt, wobei der Rotationsmodus und das Messsystem CC27 verwendet wurden. Die Messung wurde durchgeführt, nachdem die Plastisole seit ihrer Herstellung 24 Stunden bei 25 °C temperiert wurden.

Während der Messung wurden folgende Punkte angesteuert:
- Vorscherung von 100 s⁻¹ für einen Zeitraum von 60 Sekunden, bei der keine Messwerte aufgenommen wurden
- Scherraten-Abwärtsrampe von 200 s⁻¹ bis 0,1 s⁻¹. Es wurden 30 Messpunkte aufgenommen mit einer Messpunktdauer von je 10 Sekunden.

Die Messungen wurden bei Raumtemperatur durchgeführt. Bestimmt wurde jeweils die Viskosität, die bei einer Scherrate von 100 s⁻¹ erhalten wurde.

Die Ergebnisse der Viskositätsmessungen der in Beispiel 1 hergestellten Plastisole mit den jeweils angegebenen Weichmachern bzw. Weichmachermischungen sind in Tabelle 2 aufgeführt.

### Beispiel 3 - Gelierverhalten

Die Untersuchung des Gelierverhaltens der Plastisole wurde in einem Physica MCR 101 (Fa. Anton Paar) im Oszillationsmodus mit einem Platte-Platte Messsystem (PP25), welches schubspannungsgesteuert betrieben wurde, vorgenommen. Eine zusätzliche Temperierhaube wurde an das Gerät angeschlossen, um die bestmögliche Wärmeverteilung zu erreichen. Folgende Messparameter wurden eingestellt:
Modus: Temperatur-Gradient (Temperaturrampe linear)
Start-Temperatur: 25 °C
End-Temperatur: 180 °C
Heiz/Kühlrate: 5 K/min
Oszillations-Frequenz: 4 - 0,1 Hz Rampe (logarithmisch)
Kreisfrequenz Omega: 10 s⁻¹
Anzahl Messpunkte: 63
Messpunktdauer: 0,5 min
automatische Spaltnachführung
konstante Messpunktdauer
Spaltweite 0,5 mm

### Durchführung der Messung:

Auf die untere Messsystemplatte wurden mit dem Spatel einige Tropfen des zu messenden Plastisols luftblasenfrei aufgetragen. Dabei wurde darauf geachtet, dass nach dem Zusammenfahren des Messsystems etwas Plastisol gleichmäßig aus dem Messsystem herausquellen konnte (nicht mehr als ca. 6 mm rundum). Anschließend wurde die Temperierhaube über der Probe positioniert und die Messung gestartet. Dabei wurde die sog. komplexe Viskosität des Plastisols in Abhängigkeit von der Temperatur bestimmt. Ein Einsetzen des Geliervorganges war in einem plötzlichen starken Anstieg der komplexen Viskosität zu erkennen. Je früher dieser Viskositätsanstieg einsetzte, desto besser war die Gelierfähigkeit des Systems. Aus den erhaltenen Messkurven wurden durch Interpolation für jedes Plastisol die Temperaturen bestimmt, bei der eine komplexe Viskosität von 1000 Pa*s gemessen wurde. Die Ergebnisse sind in Tabelle 2 aufgeführt.

### Beispiel 4 - Folienherstellung

Die im Beispiel 1 hergestellten Plastisole wurden jeweils zu 1 mm dicken Folien verarbeitet.

Dazu wurde zunächst Hochglanztrennpapier (Fa. Sappi, Italien) auf eine Größe von 30 x 44 cm zugeschnitten und im Spannrahmen der Streicheinrichtung LTSV für den Mathis-Ofen eingelegt. Danach wurde der Spannrahmen auf den Führungsrahmen aufgelegt, der Mathis-Ofen (Typ LTF) auf 200 °C eingestellt und der Rahmen nach Erreichen dieser Temperatur vorgewärmt. Danach wurde die Rakel in die Einspannvorrichtung gelegt und der Rakelspalt über Vorversuche so eingestellt, dass die Foliendicke nach Abschluss der Gelierung 1 mm (+/- 0,05 mm) betrug. Das Plastisol wurde mithilfe der Rakel über das eingespannte Trennpapier verstrichen (3 m/min Geschwindigkeit). Danach wurde die Rakel herausgenommen und der Spannrahmen in den Ofen eingefahren. Nach der Gelierung (2 Minuten bei 200 °C) wurde der Rahmen wieder aus dem Ofen herausgefahren und nach Abkühlen die Folie von dem Papier abgezogen.

### Beispiel 5 - Kälteflexibilität mittels Glasübergangstemperatur (DSC)

Für die Messung wurde aus einer aus den jeweiligen Plastisolen nach Beispiel 4 hergestellten PVC-Folie ein kleiner Kreis (Ø 4,5mm) ausgestanzt. Diese Probe wurde in einem Aluminium-Tiegel (gelochter Tiegeldeckel) unter Stickstoff mit einer DSC 1 der Firma Mettler Toledo unter folgenden Einstellungen vermessen:

| | |
|---|---|
| Drygas Stickstoff (Trockengas): | ca. 45 Nml/min (= Norm-ml pro Minute) |
| Gas Stickstoff (Spülgas): | ca. 180 Nml/min |
| Kühlung: | flüssiger Stickstoff (Zusatzbehälter 1,5 bar) |

### Methode:

[1] 25,0 bis 120,0 °C, 25,0 K/min
[2] 120,0 °C, 5,00 min isotherm
[3] 120,0 °C, bis -50,0 °C; 25,0 K/min
[4] -50,0 bis -120,0 °C, 10,0 K/min
[5] -120,0 °C, 3,00 min isotherm
[6] -120 bis 50,0 °C, 10,0 K/min

### Synchronisation eingeschaltet

Die verschiedenen Temperaturrampen eliminieren die thermische Vorgeschichte der Probe und dienen daher einer höheren Reproduzierbarkeit der Ergebnisse. Für die Glasumwandlung wurde das Peakmaximum der ersten Ableitung aus der Rampe [6] ausgewertet. Aufgetragen wurde der erhaltene Wärmestrom als Funktion der Messtemperatur.

### Beispiel 6 - Flüchtigkeit der Weichmacher in den Folien

Aus den in Beispiel 4 hergestellten PVC- Folien wurden mit einer Stanze (Kreis; Durchmesser: 5 cm) drei Kreise pro Probe ausgestanzt. Die Proben wurden für 16 Stunden im Exsikkator klimatisiert.

Auf der Analysenwaage wurden die Proben-Kreise ausgewogen, in einen Drahtkorb gegeben und dieser mit einer Maulklammer verschlossen.

In eine Weißblechdose (1 L hohe Form) wurden 130 ml Aktivkohle gegeben. Auf die Aktivkohle wurde nun der erste Drahtkorb mit Probe mittig platziert und weitere 130 ml Aktivkohle auf den Probenkreis gegeben. Insgesamt wurden so die Weißblechdosen mit 520 ml Aktivkohle und 3 Drahtkörben mit Probe schichtweise befüllt. Als Abschluss wurde eine weitere obere Schicht aus130 ml Aktivkohle eingefüllt.

Der gelochte Deckel der Weißblechdosen wurde ohne Druck auf die Dosen gegeben. Die befüllten Weißblechdosen wurden im auf 120 °C temperierten Temperierschrank so platziert, dass der Lüfter im Schrank nicht zugestellt wurde und die Dosen sich nicht berührten. Luftwechsel und Abluftklappe wurden auf jeweils 10 % eingestellt. Nach 72 Stunden bei 120 °C wurden die Dosen wieder aus dem Schrank entnommen, abgekühlt, danach die einzelnen Proben den Körben entnommen, im Exsikkator nochmals 16 Stunden konditioniert und danach auf der Analysenwaage zurückgewogen. Die erhaltene Massedifferenz entsteht durch den Verlust an Weichmacher. Von den jeweils drei Massedifferenzen wurde der Mittelwert gebildet und prozentual der Verlust an Weichmacher errechnet. Die Ergebnisse sind in Tabelle 2 aufgeführt.

### Beispiel 7 - Bestimmung der Shore-A-Härte der Folien

Zur Bestimmung der Shore-Härten wurden die wie in Beispiel 1 hergestellten Plastisole in runde Gießformen aus Edelstahl mit einem Durchmesser von 42 mm gegossen (Einwaage: 20 g). Dann wurden die Pasten in den Formen im Umlufttrockenschrank 25 min bei 200 °C geliert, nach Abkühlung entnommen und vor der Messung mindestens 16 Stunden in Klimaraum (25 °C) konditioniert. Die Dicke der erhaltenen Prüfkörper betrug ca. 12 mm.

Die Härte-Messungen wurden in Anlehnung an DIN 53 505 mit einem Shore-A-Messgerät der Fa. Zwick-Roell durchgeführt, der Messwert jeweils nach 3 Sekunden abgelesen. An jedem Prüfkörper wurden Messungen an drei verschiedenen Stellen durchgeführt und der Mittelwert gebildet. Die Ergebnisse sind in Tabelle 2 aufgeführt.

**Tabelle 2: Ergebnisse der Messungen der Beispiele 2, 3, 5, 6 und 7**

| **WM** | **DINP** | **1,2-DINCH** | **DOTP** | **1,4-DINCH** | **1,4-DEHCH** |
|---|---|---|---|---|---|
| Viskosität Plastisol in Pa*s (Bsp. 2) | 5,3 | 3,1 | 6,3 | 2,9 | 2,8 |
| T bei 1000 Pa*s in °C (Bsp. 3) | 80 | 90 | 85 | 87 | 80 |
| T_{g} (Bsp. 5) in °C | -41 | -47 | -39 | -49 | -43 |
| Flüchtigkeit aus der Folie nach 3d / 120 °C (Bsp. 6) | 2,7 % | 4,3 % | 3,9 % | 2,6 % | 5,5 % |
| Shore A - Härte (Bsp. 7) | 81 | 84 | 83 | 82 | 77 |
| | | | | | |

| **WM** | **1,2-DEHCH** | **1,2-DINCH + DPT (2:1)** | **DOTP + DPT (3:1)** | **DOTP/2088 5:1** | **1,4-DINCH + DPT (2:1)** |
|---|---|---|---|---|---|
| Viskosität Plastisol in Pa*s (Bsp. 2) | 2,8 | 3,4 | 5,1 | 7 | 3,3 |
| T bei 1000 Pa*s (Bsp. 3) in °C | 83 | 79 | 80 | 77 | 78 |
| T_{g} (Bsp. 5) in °C | -41 | -41 | -36 | -33 | -43 |
| Flüchtigkeit aus der Folie nach 3d / 120 °C (Bsp. 6) | 9,3 % | 10,1 % | 6,7 % | 4% | 8,5 % |
| Shore A - Härte (Bsp. 7) | 81 | 79 | 79 | 80 | 77 |

Die Ergebnisse aus Tabelle 2 lassen sich wie folgt zusammenfassen:
- Die Viskosität des erfindungsgemäßen Weichmachers 1,4-DEHCH ist deutlich niedriger als bei DINP. Dadurch können höhere Füllgrade (mehr Füllstoffe) erreicht werden und/oder man kann auf die Verwendung von Viskositätserniedrigern verzichten. Das ist insofern vorteilhaft, weil zusätzliche Kosten für den Einsatz der Viskositätserniedriger (z. B. Kosten für die Substanz, Kosten für einen zusätzlichen Tank zur Lagerung der Substanz) eingespart werden können und zusätzlich mögliche Probleme durch ein Abdampfen der Viskositätserniedriger, die üblicherweise eine höhere Flüchtigkeit aufweisen, vermieden werden. Alternativ kann die hohe Effizienz, ausgedrückt durch die deutlich geringere Shore-Härte zu einer Einsparung an Weichmacher genutzt und somit die Emissionen weiter reduziert werden.
- Die Glasübergangstemperatur (T_{g}) der nach Beispiel 4 hergestellten Folien mit 1,4-DEHCH als Weichmacher ist vergleichbar zu Folien mit DINP als Weichmacher.
- Das erfindungsgemäße 1,4-DEHCH weist auch ohne die Zugabe von Schnellgelierern einen mit DINP identischen Wert für das Gelierverhalten gemäß Beispiel 3 auf. Die anderen Weichmacher 1,2-DINCH, DOTP und 1,4-DINCH können nur mit Hilfe eines Schnellgelierers (hier: DPT) auf ein vergleichbares Gelierverhalten eingestellt werden. Dadurch steigt aber auch die Flüchtigkeit (Beispiel 6) an, verschlechtert sich also.
- 1,4-DINCH zeigt zwar von allen Gemischen die niedrigste Flüchtigkeit, weiterhin eine niedrige Viskosität und die beste Kälteflexibilisierung (Bsp. 5), dafür sind aber andere Eigenschaften wie die Gelierung (Beispiel 3,) deutlich verschlechtert. Es kann hier nicht nur auf einen Parameter abgestellt werden, sondern die Gesamtperformance aus verschiedenen Parametern muss berücksichtigt werden.
- Der erfindungsgemäße Weichmacher 1,4-DEHCH zeigt von allen Alternativen zu DINP die beste Gesamtperformance hinsichtlich Gelierung, Flüchtigkeit und Effizienz (Shore-Härte, Viskosität, Kälteflexibilität). Zudem ist der Zusatz eines Schnellgelierers nicht notwendig, was aus den vorgenannten Gründen vorteilhaft ist.

## Patentansprüche

1. Mehrschichtiger Oberflächenbelag, welcher zumindest eine Schicht erhalten aus einem füllstoffhaltigen PVC-Plastisol, welches PVC, einen Füllstoff und eine Weichmacherzusammensetzung umfasst, und zumindest eine Schicht erhalten aus einem füllstofffreien PVC-Plastisol, welches PVC und eine Weichmacherzusammensetzung umfasst, **dadurch gekennzeichnet dass** die Weichmacherzusammensetzung in dem füllstoffhaltigen PVC-Plastisol und in dem füllstofffreien PVC-Plastisol jeweils 1,4-Bis(2-ethylhexyl)cyclohexandicarboxylat enthält.

2. Mehrschichtiger Oberflächenbelag nach Anspruch 1, wobei das PVC in dem füllstoffhaltigen PVC-Plastisol und in dem füllstofffreien PVC-Plastisol jeweils ein Emulsions-PVC, ein (Mikro-)Suspensions-PVC oder eine Mischung daraus ist.

3. Mehrschichtiger Oberflächenbelag nach Anspruch 2, wobei das füllstofffreie PVC-Plastisol mindestens ein Emulsions-PVC und ein (Mikro-)Suspensions-PVC enthält.

4. Mehrschichtiger Oberflächenbelag nach einem der vorhergehenden Ansprüche, wobei das füllstofffreie PVC-Plastisol die Weichmacherzusammensetzung in einem Anteil von 15 bis 40 Massenteilen pro 100 Massenteilen PVC enthält.

5. Mehrschichtiger Oberflächenbelag nach einem der vorhergehenden Ansprüche, wobei das füllstoffhaltige PVC-Plastisol die Weichmacherzusammensetzung in einem Anteil von 35 bis 80 Massenteilen pro 100 Massenteilen PVC enthält.

6. Mehrschichtiger Oberflächenbelag nach einem der vorhergehenden Ansprüche, wobei das füllstoffhaltige PVC-Plastisol den Füllstoff in einem Anteil von 50 bis 200 Massenteilen pro 100 Massenteilen PVC enthält.

7. Mehrschichtiger Oberflächenbelag nach einem der vorhergehenden Ansprüche, wobei der mehrschichtige Oberflächenbelag zumindest ein Trägermaterial umfasst, die mit einem füllstoffhaltige PVC-Plastisol einseitig oder beidseitig beschichtet worden ist.

8. Mehrschichtiger Oberflächenbelag nach Anspruch 7, wobei das Trägermaterial aus einem Polyestergewebe, einem Glasvlies, Papier oder Pappe besteht.

9. Mehrschichtiger Oberflächenbelag nach einem der vorhergehenden Ansprüche, wobei der Oberflächenbelag rückseitig eine zusätzliche geschäumte Schicht erhalten aus einem schäumbaren PVC-Plastisol aufweist.

10. Mehrschichtiger Oberflächenbelag nach Anspruch 9, wobei das schäumbare PVC-Plastisol PVC, eine Weichmacherzusammensetzung, einen Füllstoff, ein Treibmittel und einen Kicker und optional ein Additiv zur Viskositätserniedrigung umfasst.

11. Mehrschichtiger Oberflächenbelag nach Anspruch 9 oder 10, wobei die zusätzliche geschäumte Schicht erhalten aus einem schäumbaren PVC-Plastisol den Füllstoff in einem Anteil von 70 bis 200 Massenteilen pro 100 Massenteilen PVC enthält.

12. Mehrschichtiger Oberflächenbelag nach einem der Ansprüche 9 bis 11, wobei die zusätzliche geschäumte Schicht erhalten aus einem schäumbaren PVC-Plastisol den Weichmacher in einem Anteil von 40 bis 80 Massenteilen pro 100 Massenteilen PVC enthält.

13. Mehrschichtiger Oberflächenbelag nach einem der Ansprüche 9 bis 12, wobei der mehrschichtige Oberflächenbelag ein Trägermaterial, zumindest eine Schicht erhalten aus einem füllstoffhaltigen PVC-Plastisol, welches PVC, einen Füllstoff und einen Weichmacherzusammensetzung enthält, zumindest eine Schicht erhalten aus einem füllstofffreien PVC-Plastisol, welches PVC und eine Weichmacherzusammensetzung enthält, und zumindest eine geschäumte Schicht erhalten aus einem schäumbaren PVC-Plastisol, welches PVC, eine Weichmacherzusammensetzung, einen Füllstoff, ein Treibmittel und einen Kicker enthält, umfasst, **dadurch gekennzeichnet, dass** die Weichmacherzusammensetzung in allen eingesetzten PVC-Plastisolen jeweils 1,4-Bis(2-ethylhexyl)cyclohexandicarboxylat enthält.

14. Mehrschichtiger Oberflächenbelag nach Anspruch 13, wobei der mehrschichtige Oberflächenbelag zusätzliche noch eine kratzbeständige Schicht umfasst, die vorzugsweise aus Polyurethan oder Polyacrylat besteht und transparent ist.

15. Verwendung des mehrschichtigen Oberflächenbelags nach einem der vorhergehenden Ansprüche als Fußbodenbelag oder als Kunstleder.

## Claims

1. Multilayer surface covering comprising at least one layer obtained from a filler-containing PVC plastisol, comprising PVC, a filler and a plasticizer composition, and at least one layer obtained from a filler-free PVC plastisol, comprising PVC and a plasticizer composition, **characterized in that** the plasticizer composition in the filler-containing PVC plastisol and in the filler-free PVC plastisol respectively contains bis(2-ethylhexyl) cyclohexane-1,4-dicarboxylate.

2. Multilayer surface covering according to Claim 1, wherein the PVC in the filler-containing PVC plastisol and in the filler-free PVC plastisol is respectively an emulsion PVC, a (micro)suspension PVC or a mixture of these.

3. Multilayer surface covering according to Claim 2, wherein the filler-free PVC plastisol comprises at least an emulsion PVC and a (micro)suspension PVC.

4. Multilayer surface covering according to any of the preceding claims, wherein the filler-free PVC plastisol contains the plasticizer composition in a proportion of 15 to 40 parts by mass per 100 parts by mass of PVC.

5. Multilayer surface covering according to any of the preceding claims, wherein the filler-containing PVC plastisol contains the plasticizer composition in a proportion of 35 to 80 parts by mass per 100 parts by mass of PVC.

6. Multilayer surface covering according to any of the preceding claims, wherein the filler-containing PVC plastisol contains the filler in a proportion of 50 to 200 parts by mass per 100 parts by mass of PVC.

7. Multilayer surface covering according to any of the preceding claims, wherein the multilayer surface covering comprises at least one carrier material that has been coated on one or both sides with a filler-containing PVC plastisol.

8. Multilayer surface covering according to Claim 7, wherein the carrier material consists of a polyester fabric, a glass nonwoven, paper or board.

9. Multilayer surface covering according to any of the preceding claims, wherein the surface covering, on its reverse side, has an additional foamed layer obtained from a foamable PVC plastisol.

10. Multilayer surface covering according to Claim 9, wherein the foamable PVC plastisol comprises PVC, a plasticizer composition, a filler, a blowing agent and a kicker, and optionally an additive for lowering the viscosity.

11. Multilayer surface covering according to Claim 9 or 10, wherein the additional foamed layer obtained from a foamable PVC plastisol contains the filler in a proportion of 70 to 200 parts by mass per 100 parts by mass of PVC.

12. Multilayer surface covering according to any of Claims 9 to 11, wherein the additional foamed layer obtained from a foamable PVC plastisol contains the plasticizer in a proportion of 40 to 80 parts by mass per 100 parts by mass of PVC.

13. Multilayer surface covering according to any of Claims 9 to 12, where the multilayer surface covering comprises a carrier material, at least one layer obtained from a filler-containing PVC plastisol that comprises PVC, a filler and a plasticizer composition, at least one layer obtained from a filler-free PVC plastisol that comprises PVC and a plasticizer composition, and at least one foamed layer obtained from a foamable PVC plastisol that comprises PVC, a plasticizer composition, a filler, a blowing agent and a kicker, **characterized in that** the plasticizer composition in each of the PVC plastisols used contains bis(2-ethylhexyl) cyclohexane-1,4-dicarboxylate.

14. Multilayer surface covering according to Claim 13, wherein the multilayer surface covering additionally also comprises a scratch-resistant layer that preferably consists of polyurethane or polyacrylate and is transparent.

15. Use of the multilayer surface covering according to any of the preceding claims as floor covering or as imitation leather.

## Revendications

1. Revêtement surfacique multicouche, qui comprend au moins une couche obtenue à partir d'un plastisol de PVC contenant une charge, qui comprend du PVC, une charge et une composition plastifiante, et au moins une couche obtenue à partir d'un plastisol de PVC exempt de charge, qui comprend du PVC et une composition plastifiante, **caractérisé en ce que** la composition plastifiante dans le plastisol de PVC contenant une charge et dans le plastisol de PVC exempt de charge contient à chaque fois du 1,4-cyclohexanedicarboxylate de bis(2-éthylhexyle).

2. Revêtement surfacique multicouche selon la revendication 1, le PVC dans le plastisol de PVC contenant une charge et dans le plastisol de PVC exempt de charge étant à chaque fois un PVC en émulsion, un PVC en (micro)suspension ou un mélange de ceux-ci.

3. Revêtement surfacique multicouche selon la revendication 2, le plastisol de PVC exempt de charge contenant au moins un PVC en émulsion et un PVC en (micro)suspension.

4. Revêtement surfacique multicouche selon l'une des revendications précédentes, le plastisol de PVC exempt de charge contenant la composition plastifiante en une proportion de 15 à 40 parties en masse par 100 parties en masse de PVC.

5. Revêtement surfacique multicouche selon l'une des revendications précédentes, le plastisol de PVC contenant une charge contenant la composition plastifiante en une proportion de 35 à 80 parties en masse par 100 parties en masse de PVC.

6. Revêtement surfacique multicouche selon l'une des revendications précédentes, le plastisol de PVC contenant une charge contenant la charge en une proportion de 50 à 200 parties en masse par 100 parties en masse de PVC.

7. Revêtement surfacique multicouche selon l'une des revendications précédentes, le revêtement surfacique multicouche comprenant au moins un matériau support, qui a été revêtu sur une face ou sur les deux faces par un plastisol de PVC contenant une charge.

8. Revêtement surfacique multicouche selon la revendication 7, le matériau support étant constitué par un tissu en polyester, un non-tissé en verre, du papier ou du carton-pâte.

9. Revêtement surfacique multicouche selon l'une des revendications précédentes, le revêtement surfacique présentant sur la face arrière une couche moussée supplémentaire, obtenue à partir d'un plastisol de PVC pouvant être moussé.

10. Revêtement surfacique multicouche selon la revendication 9, le plastisol de PVC pouvant être moussé comprenant du PVC, une composition plastifiante, une charge, un agent gonflant et un kicker et éventuellement un additif pour l'abaissement de la viscosité.

11. Revêtement surfacique multicouche selon la revendication 9 ou 10, la couche moussée supplémentaire obtenue à partir d'un plastisol de PVC pouvant être moussé contenant la charge en une proportion de 70 à 200 parties en masse par 100 parties en masse de PVC.

12. Revêtement surfacique multicouche selon l'une des revendications 9 à 11, la couche moussée supplémentaire obtenue à partir d'un plastisol de PVC pouvant être moussé contenant le plastifiant en une proportion de 40 à 80 parties en masse par 100 parties en masse de PVC.

13. Revêtement surfacique multicouche selon l'une des revendications 9 à 12, le revêtement surfacique multicouche comprenant un matériau support, au moins une couche obtenue à partir d'un plastisol de PVC contenant une charge, qui contient du PVC, une charge et une composition plastifiante, au moins une couche obtenue à partir d'un plastisol de PVC exempt de charge, qui contient du PVC et une composition plastifiante, et au moins une couche moussée, obtenue à partir d'un plastisol de PVC pouvant être moussé, qui contient du PVC, une composition plastifiante, une charge, un agent gonflant et un kicker, **caractérisé en ce que** la composition plastifiante dans tous les plastisols de PVC utilisés contient à chaque fois du 1,4-cyclohexanedicarboxylate de bis(2-éthylhexyle) .

14. Revêtement surfacique multicouche selon la revendication 13, le revêtement surfacique multicouche comprenant en plus encore une couche résistante aux rayures, qui est de préférence constituée par du polyuréthane ou du polyacrylate et transparente.

15. Utilisation du revêtement surfacique multicouche selon l'une des revendications précédentes comme revêtement de sol ou comme cuir synthétique.
